# EUROPÄISCHE PATENTSCHRIFT

(11) **EP 4 108 851 B1**
(45) Veröffentlichungstag und Bekanntmachung des Hinweises auf die Patenterteilung: **12.06.2024**
(21) Anmeldenummer: 22180060.0
(22) Anmeldetag: 21.06.2022
(51) Int. Cl.: E04G 11/50, E04G 11/54, E04B 1/24, E04C 3/06, F16B 7/04, F16B 21/12, E04C 3/04

(54) **BOLZENVERBINDER, BAUSTRUKTUR, SCHALUNGSVORRICHTUNG UND VERFAHREN**
BOLT CONNECTOR, STRUCTURE, FORMWORK DEVICE AND METHOD
CONNECTEUR À BOULON, STRUCTURE DE CONSTRUCTION, DISPOSITIF DE COFFRAGE ET PROCÉDÉ

(30) Priorität: 21.06.2021 DE 102021115948
(43) Veröffentlichungstag der Anmeldung: 28.12.2022
(73) Patentinhaber: DOKA GmbH, 3300 Amstetten (AT)
(72) Erfinder: LANG, Thomas, 3300 Greinsfurth (AT)
(74) Vertreter: SONN Patentanwälte GmbH & Co KG

(56) Entgegenhaltungen:
- EP-A2- 0 032 860
- EP-B1- 0 973 985
- CN-A- 106 246 664
- CN-U- 203 296 370
- ES-A1- 2 321 679
- Stop P.: "bolt steel plate | 3D Warehouse", , 23. Januar 2018 (2018-01-23), Seiten 1-2, XP055966851, Internet Gefunden im Internet: URL:https://3dwarehouse.sketchup.com/model /868d5d32-19e4-49d4-8783-50aa133c730e/bolt -steel-plate [gefunden am 2022-09-30]
- Anonymous: "Baseplate voor Prolyte truss vierkant BASE-30V kopen? | Stage Roads", , 4. September 2018 (2018-09-04), Seiten 1-7, XP055966866, Internet Gefunden im Internet: URL:https://www.stageroads.nl/assortiment/ truss-rigging/vierkant-truss/prolyte-h30v- vierkant-truss/baseplate-voor-prolyte-trus s-vierkant-base-30v/?gclid=EAIaIQobChMIj6D n7526-gIVeY9oCR0NYQXWEAQYBSABEgJ1VfD_BwE [gefunden am 2022-09-30]

## Beschreibung

Die Erfindung betrifft eine Baustruktur, vorzugsweise ein Trag- oder Stützgerüst, nach dem Oberbegriff von Anspruch 1.

Schließlich betrifft die Erfindung eine Schalungsvorrichtung, aufweisend:
eine Baustruktur, vorzugsweise ein Trag- oder Stützgerüst,
eine Schalung, welche mit der Baustruktur verbunden ist.

Wie in der WO 2017/125238 A1 geschildert wird, sind bekannte Traggerüste zum Abstützen von Schalungen aus einzelnen, reversibel miteinander verbindbaren Teilen baukastenartig zusammengesetzt. Einen Hauptbestandteil der Traggerüste stellen dabei Riegel dar, die über Verbinder mittelbar miteinander verbunden sind. Im Stand der Technik ist es einerseits bekannt, jeden Verbinder durch sechs M16-Schrauben an einem Riegel anzuordnen. Das Eindrehen und spätere Lösen dieser sechs Schrauben je Verbindung zwischen Riegel und Verbinder führt jedoch zu einem hohen Montage- und Demontageaufwand. Die WO 2017/125238 A1 schlägt demgegenüber ein Traggerüst für mittlere Lasten vor, bei dem die Riegel aus Stahl mit einer oberen Streckgrenze von mehr als 490 MPa und einer Riegelhöhe kleiner 200 mm ausgebildet sind und jeder Riegel durch zwei Bolzen, in Form von Steck- bzw. Passbolzen, am Verbinder angeordnet ist. Auch diese Lösung bringt jedoch erheblichen Montage- und Demontageaufwand mit sich, weil die Steckbolzen einzeln angebracht werden müssen. Weiters ist sorgfältiges Arbeiten erforderlich, da vergessene Bolzen die Tragfähigkeit des Gerüsts beeinträchtigen könnten und somit ein Sicherheitsrisiko darstellen.

Der weitere Stand der Technik wird u.a. durch CN 106 246 664 A, CN 203 296 370, ES 2 321 679 A1, EP 0 032 860 A2 und EP 0 973 985 B1 gebildet.

Demnach besteht die Aufgabe der vorliegenden Erfindung darin, zumindest einzelne Nachteile des Standes der Technik zu lindern bzw. zu beheben. Die Erfindung setzt sich bevorzugt zum Ziel, eine Baustruktur wie ein Traggerüst zu schaffen, welche einfach und rasch aufgebaut und wieder abgebaut werden kann. Weiter soll bevorzugt das Sicherheitsrisiko aufgrund fehlerhafter Montage reduziert werden.

Diese Aufgabe wird durch eine Baustruktur nach Anspruch 1, eine Schalungsvorrichtung nach Anspruch 12 und ein Verfahren nach Anspruch 13 gelöst.

Der Bolzenverbinder der erfindungsgemäßen Baustruktur ist gekennzeichnet durch:
eine Grundplatte,
mehrere Bolzen, die an der Grundplatte angebracht sind.

Erfindungsgemäß wird daher ein Mehrfach-Bolzenverbinder vorgesehen, mit welchem der Riegel an dem Verbindungs- bzw. Knotenteil der Baustruktur festgemacht ist. Als Baustruktur ist insbesondere ein Trag- oder Stützgerüst vorgesehen, welches im Bauwesen verwendet wird. Der Bolzenverbinder hat mehrere Bolzen, insbesondere Steckbolzen, welche an der gemeinsamen Grundplatte montiert sind. Der Bolzenverbinder ist als vormontierte Einheit ausgebildet. Beim Zusammenbau der Baustruktur wird der Bolzenverbinder jeweils mit dem Riegel und dem Verbindungsteil reversibel lösbar verbunden, wobei die Bolzen an der Grundplatte des Bolzenverbinders im selben Arbeitsschritt durch Durchtrittsöffnungen des Riegels und damit fluchtend angeordnete Durchgangsöffnungen des Verbindungsteils eingebracht werden. Vorteilhafterweise können so die Montagezeiten wesentlich verkürzt werden. Im Vergleich zur einzelnen Anordnung von Verbindungsbolzen wird mit dem Mehrfach-Bolzenverbinder zudem die Sicherheit erhöht, da nicht einzelne Bolzen vergessen werden können.

Der Mehrfach-Bolzenverbinder bringt jedoch das Problem mit sich, dass die Durchtrittsöffnungen des Riegels bzw. die Durchgangsöffnungen des Verbindungsteils vor der Anordnung des Bolzenverbinders sehr präzise aneinander ausgerichtet werden müssen. Hinzu kommt, dass die Anordnungen der Durchtritts- bzw. Durchgangsöffnungen durch den Fertigungsprozess gewissen Toleranzen unterliegen. Aufgrund dieser Fertigungstoleranzen der korrespondierenden Teile hat es sich als schwierig herausgestellt, die nötige Genauigkeit für die Anordnung der Bolzen zu erreichen. Deshalb sind die Bolzen bei einer besonders bevorzugten Ausführungsform beweglich an der Grundplatte angebracht. Bevorzugt sind die Bolzen in eine erste Richtung der Grundplatte mit einem ersten Spiel und in eine zweite Richtung der Grundplatte mit einem zweiten Spiel beweglich an der Grundplatte angeordnet. Dadurch können sich die Bolzen seitlich bewegen und zudem verkippen, wodurch Ungenauigkeiten und Fertigungstoleranzen ausgeglichen werden können. Die erste und die zweite Richtung sind vorzugsweise orthogonal zueinander. Bevorzugt spannen die erste und die zweite Richtung eine Haupterstreckungsebene der Grundplatte auf. Wenn die Grundplatte länglich ist, kann die erste Richtung die Längsrichtung der Grundplatte und die zweite Richtung die Querrichtung der Grundplatte sein. Vorzugsweise sind die Bolzen in beliebige Richtungen parallel zur Haupterstreckungsebene der Grundplatte, vorzugsweise jeweils mit im Wesentlichen demselben Spiel, beweglich an der Grundplatte gelagert.

Um die Beweglichkeit für das gleichzeitige Anordnen der Bolzen des Mehrfach-Bolzenverbinders sicherzustellen, ist es günstig, wenn das erste Spiel zumindest 0,10 Millimeter (mm), vorzugsweise zumindest 0,50 mm, und/oder das zweite Spiel zumindest 0,10 mm, vorzugsweise zumindest 0,25 mm, beträgt. Vorzugsweise beträgt das erste Spiel weniger als 5,00 mm und/oder das zweite Spiel weniger als 5,00 mm. Besonders bevorzugt ist es, wenn das erste Spiel im Wesentlichen 1,00 mm und/oder das zweite Spiel im Wesentlichen 0,50 mm beträgt.

Darüber hinaus ist es günstig, wenn die Bolzen mit einem dritten Spiel in Längsrichtung der Bolzen beweglich an der Grundplatte angeordnet sind. Dadurch wird die Verbindung mit dem Riegel weiter erleichtert.

Bei einer bevorzugten Ausführungsform weisen die Bolzen des Mehrfach-Bolzenverbinders jeweils eine Länge von zumindest 40 mm, insbesondere von 50 bis 250 mm, gerechnet vom freien Ende der Bolzen zu der (dem Riegel zugewandten) Vorderseite der Grundplatte auf.

Bei einer weiteren bevorzugten Ausführungsform weisen die Bolzen des Mehrfach-Bolzenverbinders einen maximalen Durchmesser (d.h. einen Durchmesser an der breitesten Stelle) von 5 mm bis 40 mm, insbesondere von 10 bis 25mm, auf.

Die Grund- bzw. Basisplatte ist bevorzugt einteilig, insbesondere aus Metall, gebildet. Die Wandstärke der Grundplatte ist bevorzugt im Wesentlichen konstant. Beispielsweise kann die Wandstärke der Grundplatte von 3 mm bis 30 mm, insbesondere von 5 bis 20mm, betragen.

Bei einer bevorzugten Ausführungsform sind an der Grundplatte insbesondere kreisförmige Öffnungen ausgebildet, in denen erste Enden der Bolzen mit dem ersten und dem zweiten Spiel, vorzugsweise zudem mit dem dritten Spiel, angeordnet sind.

Bei einer bevorzugten Ausführungsform sind erste Enden der Bolzen über Haltestifte an der Grundplatte gelagert. Die Haltestifte sind bei einer ersten Variante im Wesentlichen spielfrei (d.h. höchstens mit einem um ein Mehrfaches, insbesondere um ein Vielfaches, geringeren Spiel im Vergleich zum ersten und zweiten Spiel) an der Grundplatte fixiert. Demgegenüber sind die Bolzen über die Haltestifte bei der ersten Variante mit dem ersten und dem zweiten Spiel beweglich in den Öffnungen der Grundplatte gelagert. Zu diesem Zweck sind die Öffnungen entsprechend größer als die ersten Enden der Bolzen. Insbesondere weisen die Öffnungen bevorzugt einen größeren Durchmesser als die ersten Enden der Bolzen auf. Bei einer zweiten bevorzugten Variante sind die Haltestifte im Wesentlichen spielfrei an den Bolzen angeordnet, wobei die Haltestifte mit dem ersten und dem zweiten Spiel beweglich an der Grundplatte angeordnet sind.

Bei einer alternativen Ausführungsform weist die Verbindung zwischen Bolzen und Grundplatte ein flexibles Material auf. So kann der jeweilige Bolzen bei einer bevorzugten Ausführungsform am ersten Ende eine umlaufende Nut aufweisen, wobei der Freiraum zwischen der vorzugsweise kreisförmigen Öffnung der Grundplatte und der umlaufenden Nut am ersten Ende des Bolzens mit dem flexiblen Material ausgefüllt ist.

Zur unlösbaren, aber seitlich beweglichen Anordnung der Bolzen an der Grundplatte können die Bolzen an den ersten Enden Querbohrungen aufweisen, durch welche die Haltestifte gesteckt sind. Der Durchmesser des Querschnitts der Querbohrung ist bei dieser Variante bevorzugt größer als der Durchmesser des Haltestifts. Bei einer alternativen Ausführungsform ist es auch denkbar, den Durchmesser an der Grundplatte mit einem größeren Spiel vorzusehen und die Querbohrung der Bolzen im Wesentlichen spielfrei mit den Haltestiften zu gestalten.

Um ein ungewolltes Lösen des Bolzenverbinders im verbundenen Zustand mit dem Riegel und dem Verbindungsteil zu verhindern, ist bevorzugt zumindest ein Sicherungselement, wie z.B. ein Sicherungssplint oder eine Sicherungsmutter, lösbar mit einem zweiten Ende eines der Bolzen verbunden.

Bei einer bevorzugten Ausführungsform sind die von der Grundplatte abgewandten, zweiten Enden der Bolzen verjüngt ausgeführt. Dadurch wird das Einführen der Bolzen erleichtert. Um das Einführen der Bolzen noch zusätzlich zu erleichtern, kann zumindest einer der Bolzen länger als zumindest ein anderer der Bolzen ausgeführt sein. Bei einer Ausführungsform kann der Bolzenverbinder zumindest zwei Reihen mit jeweils zumindest zwei Bolzen aufweisen, wobei die Bolzen einer ersten Reihe länger, beispielsweise um zumindest 1/5 länger, als die Bolzen einer zweiten Reihe sind. Die "Länge" bezeichnet dabei die Längserstreckung der Bolzen gerechnet von der Vorderseite der Grundplatte.

Um den Bolzenverbinder besonders einfach handhaben zu können, ist bei einer bevorzugten Ausführungsform ein Haltebügel zum Hantieren des Bolzenverbinders, insbesondere an der Rückseite der Grundplatte, vorgesehen. Der Haltebügel steht bevorzugt so von der Rückseite der Grundplatte ab, dass zwischen dem Haltebügel und der von den Bolzen abgewandten Rückseite der Grundplatte eine Ausnehmung für den Benutzer ausgebildet wird.

Für eine sichere Verbindung des Riegels mit dem Verbindungsteil ist es günstig, wenn zumindest zwei Reihen, vorzugsweise drei Reihen, mit jeweils zumindest zwei Bolzen an der Grundplatte angebracht sind. Bei einer besonders bevorzugten Ausführung sind genau drei Reihen mit jeweils genau zwei Bolzen vorgesehen.

Bei einer alternativen Ausführungsform ist es auch denkbar, die Verbinder als Doppelbolzen oder Dreifachbolzen oder Vierfachbolzen usw. in nur einer Reihe auszuführen. Dieser einreihige Bolzenverbinder kann so nach Lastanforderung konfiguriert sein.

Der Bolzenverbinder ist bei einer Baustruktur, vorzugsweise bei einem Trag- oder Stützgerüst, eingesetzt, und verbindet den Riegel mit dem Verbindungsteil. Als Riegel ist bevorzugt ein langgestrecktes Tragteil, insbesondere aus Metall, mit einer Länge von 0,5 Meter (m) bis 6,0 m, insbesondere von 1,0 m bis 3,0 m, vorgesehen. Das Verbindungsteil ist im Vergleich zum Riegel um ein Mehrfaches kürzer.

Bevorzugt ist die Baustruktur variabel aus mehreren Riegeln, mehreren Verbindungsteilen und mehreren Bolzenverbindern, jeweils in einer der oben beschriebenen Ausführungsvarianten, aufgebaut. Die Bolzenverbinder fixieren dabei die Riegel an den Verbindungsteilen. Je nach Stelle in der Baustruktur können ein, zwei, drei oder mehr Riegel an dem jeweiligen Verbindungsteil befestigt werden. Dafür weist das Verbindungsteil eine entsprechende Anzahl von Verbindungsbereichen auf.

Um eine Demontage der Baustruktur zu ermöglichen, ist die Verbindung zwischen dem Riegel und dem Verbindungsteil über den Bolzenverbinder bevorzugt reversibel und werkzeuglos lösbar.

Bei einer ersten bevorzugten Ausführung ist zumindest ein Verbindungsteil als Einzelverbinder mit genau einem Verbindungsbereich zur Verbindung mit genau einem Riegel ausgebildet. Dieser Einzelverbinder kann beispielsweise am oberen oder am unteren Ende der Baustruktur eingesetzt werden.

Bei einer zweiten bevorzugten Ausführung ist zumindest ein Verbindungsteil als Längsverbinder mit vorzugsweise genau zwei in entgegengesetzten Richtungen erstreckten Verbindungsbereichen ausgebildet, wobei zwei Riegel über zwei Bolzenverbinder mit den zwei in entgegengesetzten Richtungen erstreckten Verbindungsbereichen des Verbindungsteils verbunden sind.

Bei einer dritten bevorzugten Ausführung ist zumindest ein Verbindungsteil als Fachwerkverbinder mit mehreren winkelig zueinander angeordneten Verbindungsbereichen ausgebildet, wobei bevorzugt zwei, drei oder vier Riegel in spitzen Winkeln von 30° bis 80°, beispielsweise im Wesentlichen 60°, zueinander (bezogen auf benachbarte Riegel) über eine entsprechende Anzahl von Bolzenverbindern mit einer entsprechenden Anzahl von Verbindungsbereichen des Verbindungsteils verbunden sind.

Je nach Anwendung kann die Baustruktur mehrere Verbindungsteile jeweils der ersten und/oder der zweiten und/oder der dritten Ausführung, in allen Varianten, aufweisen. Der Bolzenverbinder in einer der oben beschriebenen Varianten kann die erste, die zweite und die dritte Ausführung des Verbindungsteils mit dem jeweiligen Riegel verbinden.

Aus Gründen der Tragfähigkeit weist der Riegel zwei Profile, insbesondere U-Profile, auf, wobei ein Verbindungsbereich des Verbindungsteils zwischen den zwei Profilen des Riegels angeordnet ist, wobei der Bolzenverbinder die zwei Profile des Riegels mit dem Verbindungsbereich des Verbindungsteils verbindet. Die zwei Profile sind vorzugsweise parallel und benachbart zueinander angeordnet. Zwischen den zwei Profilen sind Verbindungen, beispielsweise Verbindungsstücke, vorgesehen, welche die Profile in einem Abstand senkrecht zu ihren Längsachsen halten.

Bei einer bevorzugten Ausführung beträgt die Höhe des Riegels (d.h. die Erstreckung senkrecht zur Längsachse und senkrecht zu den Längsachsen der Bolzen) von 30 bis 400 mm, insbesondere von 80 bis 160 mm, beispielsweise im Wesentlichen 120 mm. Weiters kann die Breite des Riegels (d.h. die Erstreckung senkrecht zur Längsachse und parallel zu den Längsachsen der Bolzen) von 15 bis 110 mm, insbesondere von 45 bis 65 mm, betragen.

Je nach Ausführung kann die Baustruktur jeweils zumindest eine Horizontal-, Vertikal- und/oder Diagonalstrebe aufweisen. Zumindest eine Horizontal-, Vertikal- und/oder Diagonalstrebe kann an dem Verbindungsteil angeschlossen sein.

Bei einer ersten bevorzugten Anwendung weist eine Baustruktur in Form eines Traggerüsts einen Rüstbinder mit mehreren Riegeln, mehreren Verbindungsteilen und mehreren Bolzenverbindern auf. Der Rüstbinder ist ein brückenförmiges Traggerüst. Bevorzugt weist der Rüstbinder mindestens zwei Fachwerke auf, welche jeweils aus mit Fachwerkverbindern verbundenen Riegeln zusammengesetzt sind. Je nach Stelle im Fachwerk können einzelne Verbindungsteile zwei Riegel über zwei Bolzenverbinder und/oder drei Riegel über drei Bolzenverbinder und/oder vier Riegel über vier Bolzenverbinder verbinden. Die Fachwerke können vertikale Ebenen aufspannen, welche über horizontale Streben miteinander verbunden sein können.

Bei einer zweiten bevorzugten Anwendung weist eine Baustruktur in Form eines Traggerüsts einen in die Höhe ragenden Lastturm mit mehreren Riegeln, mehreren Verbindungsteilen und mehreren Bolzenverbindern auf. Bei dieser Anwendung können die oben beschriebenen Einzelverbinder und/oder Längsverbinder vorgesehen sein.

Eine Schalungsvorrichtung weist die Baustruktur, vorzugsweise das Trag- oder Stützgerüst, in einer der zuvor beschriebenen Ausführungsvarianten und eine Schalung auf, welche mit der Baustruktur verbunden ist. Bei einer bevorzugten Ausführung dient das Traggerüst zur Unterstellung der Schalung. Bei einer weiteren Ausführung dient das Stützgerüst, beispielsweise ein Abstützbock, zur Abstützung der Schalung.

Erfindungsgemäß ist auch ein Verfahren zum Zusammenbau einer Baustruktur, insbesondere eines Trag- oder Stützgerüsts, gemäss Anspruch 13, mit zumindest den folgenden Schritten durchgeführt werden:
Vorsehen zumindest eines Verbindungsteils,
Vorsehen zumindest eines Riegels,
Verbinden des Riegels mit dem Verbindungsteil mittels eines Bolzenverbinders in einer der oben beschriebenen Ausführungsvarianten.

Ausführungsbeispiele der Erfindung werden nachstehend anhand der Zeichnungen erläutert.
Fig. 1 zeigt eine schaubildliche Ansicht eines erfindungsgemäßen Traggerüsts in einer Ausführung als Lastturm.
Fig. 2 zeigt eine erste Seitenansicht des Traggerüsts in Form des Lastturms.
Fig. 3 zeigt eine zweite Seitenansicht des Traggerüsts in Form des Lastturms.
Fig. 4 zeigt schaubildlich die Verbindung von zwei Riegeln und einem Verbindungsteil des Traggerüsts über Mehrfach-Bolzenverbinder.
Fig. 5 zeigt eine Seitenansicht der Darstellung von Fig. 4.

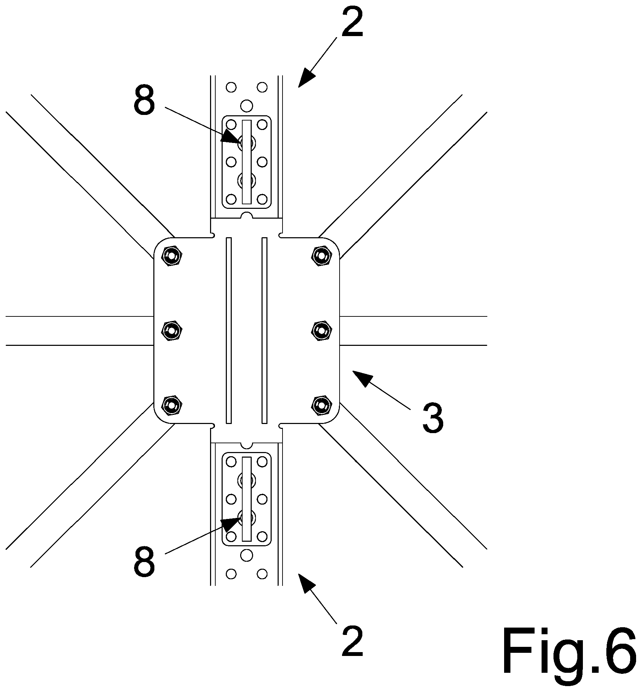

Fig. 6 zeigt eine Detailansicht eines Knotens zwischen den zwei Riegeln des Traggerüsts der Fig. 1 bis 3.

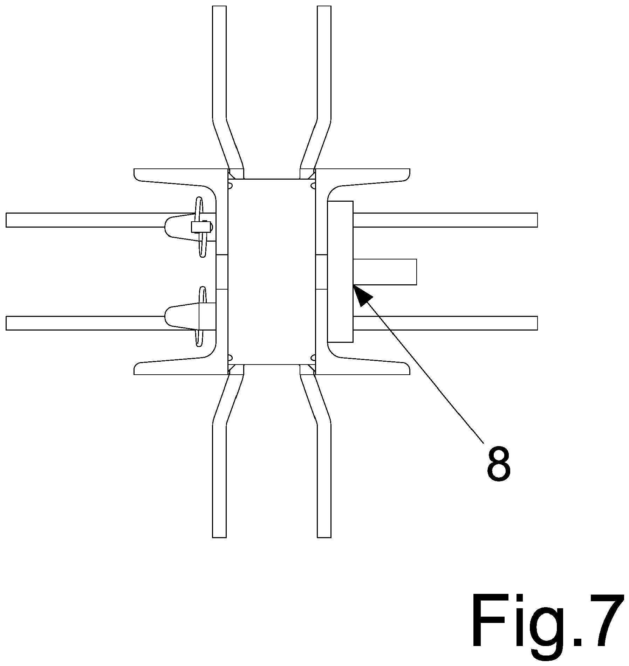

Fig. 7 zeigt einen Schnitt durch den Knoten zwischen den zwei Riegeln des Traggerüsts der Fig. 1 bis 3.
Fig. 8 zeigt die Anbindung eines unteren Riegels an ein unteres Verbindungsteil, ebenfalls über einen Mehrfach-Bolzenverbinder.

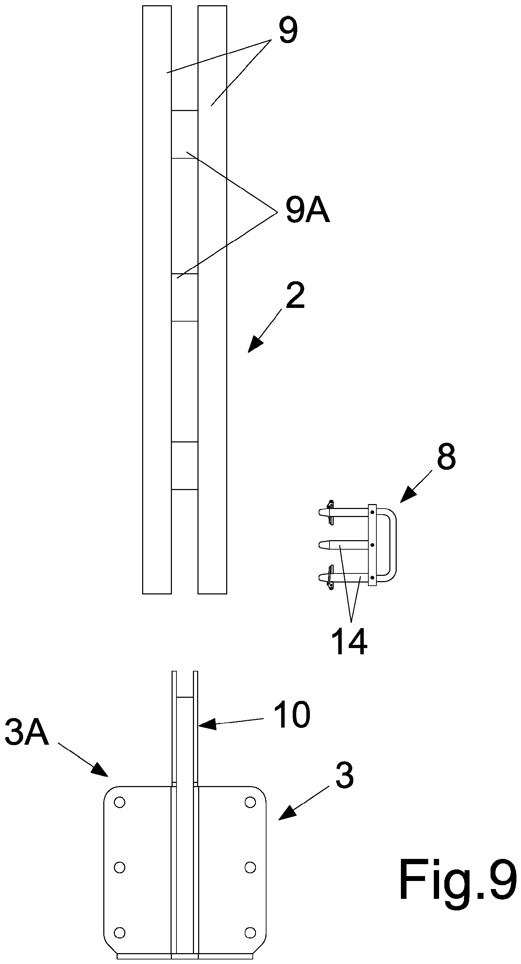

Fig. 9 zeigt eine Seitenansicht der Darstellung gemäß Fig. 8.
Fig. 10 zeigt eine schaubildliche Ansicht des Bolzenverbinders.
Fig. 11 zeigt eine Schnittansicht des Bolzenverbinders.
Fig. 12 zeigt schaubildlich eine alternative Ausführung des erfindungsgemäßen Traggerüsts als Rüstbinder.
Fig. 13 zeigt eine Seitenansicht des Rüstbinders der Fig. 12.
Fig. 14 zeigt im Detail den Knoten zwischen vier Riegeln an einem als Fachwerkverbinder ausgeführten Verbindungsteils, wobei eine entsprechende Anzahl von Mehrfach-Bolzenverbindern angeordnet wird.
Fig. 15 zeigt eine alternative Ausführung, bei welcher einzelne der Bolzen des Mehrfach-Bolzenverbinders länger als die anderen ausgeführt sind.

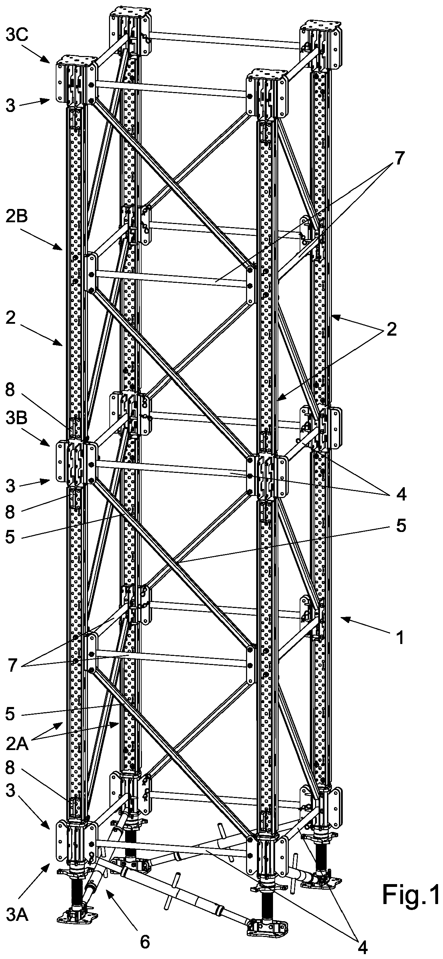

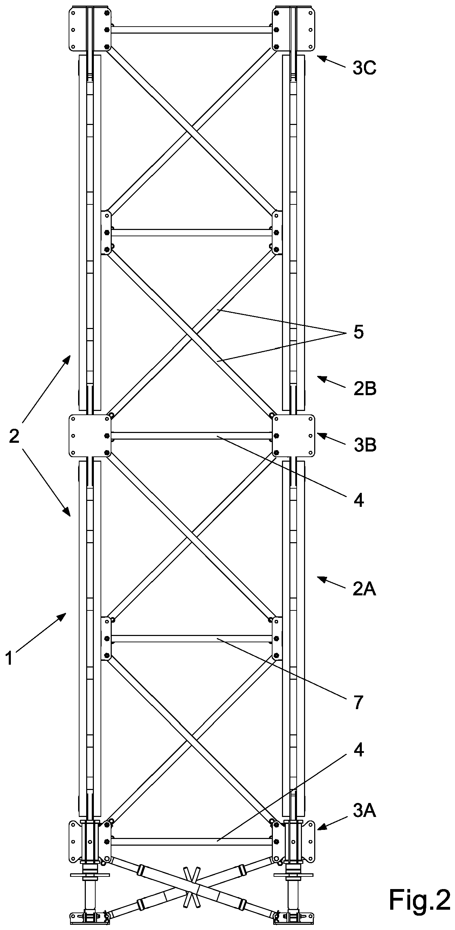

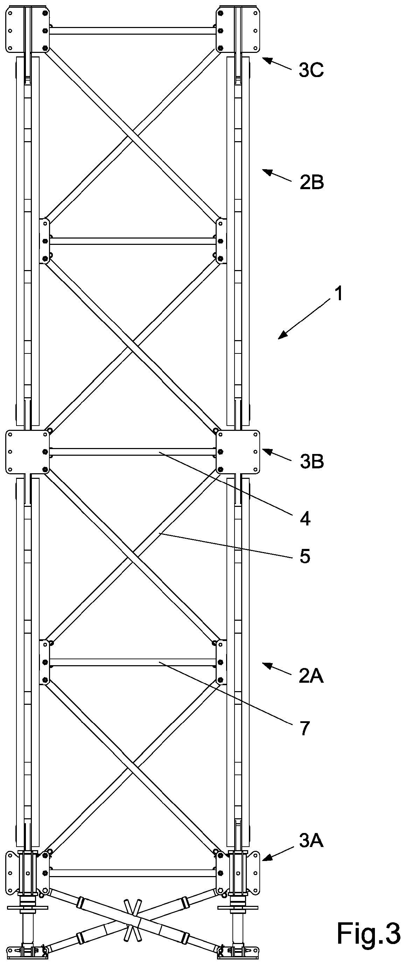

Die Fig. 1 bis 3 zeigen eine Trag- oder Stützstruktur im Bauwesen. In der gezeigten Ausführung ist als Trag- oder Stützstruktur ein Traggerüst 1 in Form eines Lastturms, insbesondere zum Abstützen einer (nicht gezeigten) Schalung, vorgesehen. Das Traggerüst 1 weist Riegel 2 auf, welche bei dieser Ausführung im Wesentlichen vertikal angeordnet sind.

Alle Orts- und Richtungsangaben dieser Offenbarung beziehen sich auf den jeweiligen bestimmungsgemäßen Gebrauchszustand des Traggerüsts 1 auf einem horizontalen Untergrund.

Die Riegel 2 bilden die vier Eckbereiche des Lastturms, welcher eine rechteckige, beispielsweise im Wesentlichen quadratische, Grundfläche aufweist, von welcher sich der Lastturm nach oben erstreckt. An jedem Eckbereich des Lastturms sind mehrere Riegel 2 übereinander angeordnet. Die Riegel 2 sind an Verbindungsteilen 3 montiert, welche die Knoten des Traggerüsts 1 bilden. Auf einer höhenverstellbaren Basis 6 sind untere Verbindungsteile 3A in Form von Einzelverbindern montiert, an denen nur oberseitig untere Riegel 2A angeschlossen sind. Die oberen Enden der unteren Riegel 2A sind über mittlere Verbindungsteile 3B in Form von Längsverbindern mit den unteren Enden von oberen Riegeln 2B verbunden. Die oberen Enden der oberen Riegel 2B sind an oberen Verbindungsteilen 3C in Form von Einzelverbindern angeschlossen. In den Fig. 1 bis 3 ist allerdings nur ein beispielhafter Aufbau des Traggerüsts 1 gezeigt. Das Traggerüst kann eine beliebige Höhe, und damit auch eine entsprechende Anzahl von Riegeln 2; 2A, 2B an den Eckbereichen aufweisen.

Darüber hinaus weist das Traggerüst 1 in der gezeigten Ausführungsvariante horizontale Querstreben 4 auf, welche benachbarte Verbindungsteile 3 auf derselben Horizontalebene miteinander verbinden. In der gezeigten Ausführung sind zudem Diagonalstreben 5 vorgesehen, welche jeweils eines der Verbindungsteile 3 mit einem Kopplungsteil 6 verbinden, das im gezeigten Ausführungsbeispiel im Wesentlichen auf halber Höhe des jeweiligen Riegels 2 montiert ist. Zwischen den Kopplungsteilen 6 benachbarter Eckbereiche derselben Horizontalebene können sich weitere Horizontalstreben 7 erstrecken.

In der gezeigten Ausführung sind die Riegel 2 über Mehrfach-Bolzenverbinder 8 an den Verbindungsteilen 3 montiert.

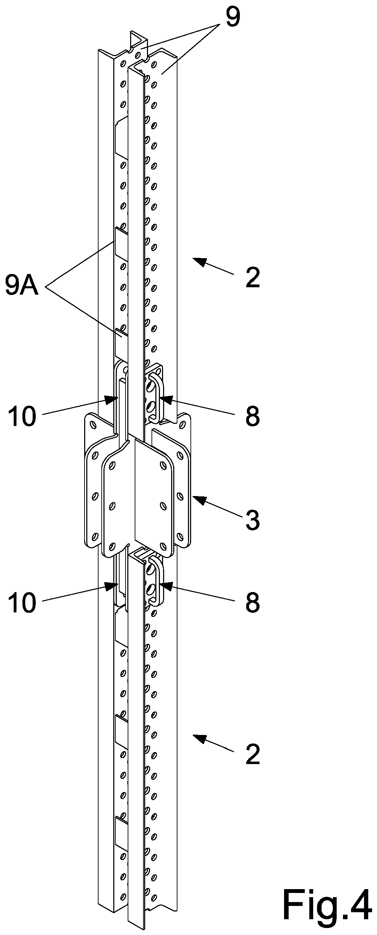

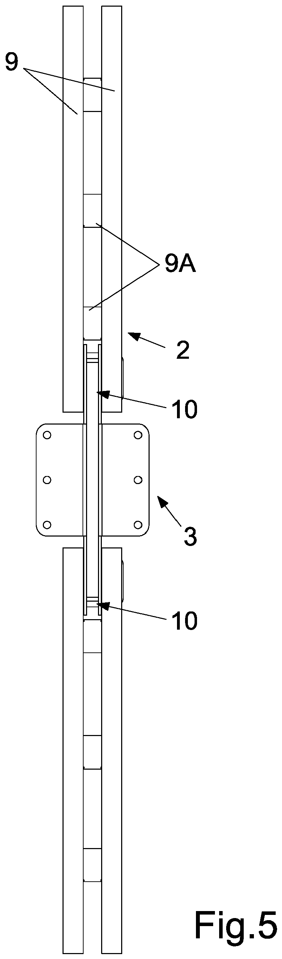

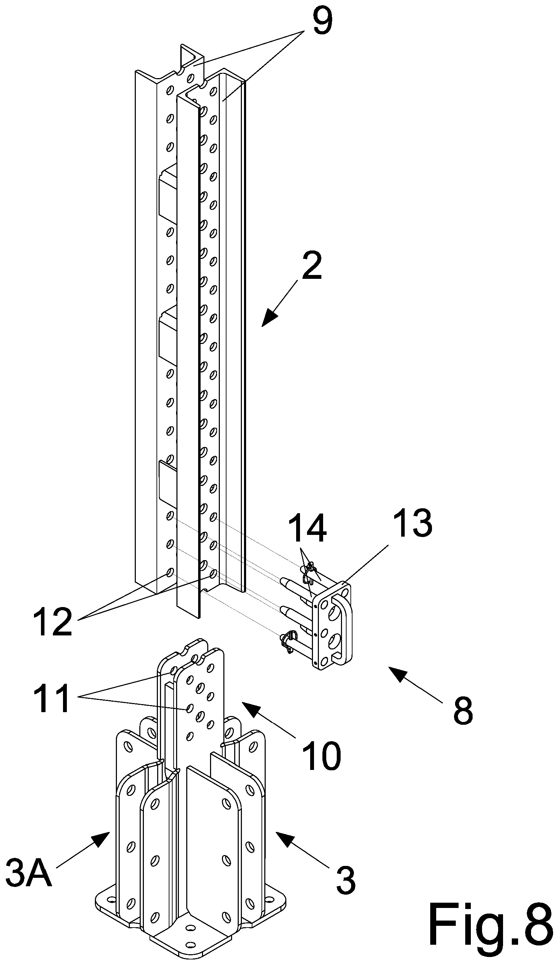

Wie insbesondere aus Fig. 4, Fig. 5 und Fig. 8 ersichtlich, weisen die Riegel 2 jeweils zwei Profile 9, in der gezeigten Ausführung zwei U-Profile, auf, welche über Verbindungsstücke 9A in einem Abstand zueinander verbunden sind. Das Verbindungsteil 3 hat zumindest einen Verbindungsbereich 10, der in einem Zwischenraum zwischen den zwei Profilen 9 des Riegels 2 angeordnet wird. Am Verbindungsbereich 10 des Verbindungsteils 3 sind Durchgangsöffnungen 11 ausgebildet, welche im zusammengesteckten Zustand fluchtend mit Durchtrittsöffnungen 12 der Profile 9 des Riegels 2 angeordnet sind. Durch Anordnen des Bolzenverbinders 8 wird der Riegel 2 insbesondere in seine Längsrichtung, hier also in vertikaler Richtung, im Wesentlichen unbeweglich an dem Verbindungsteil 3 angeordnet.

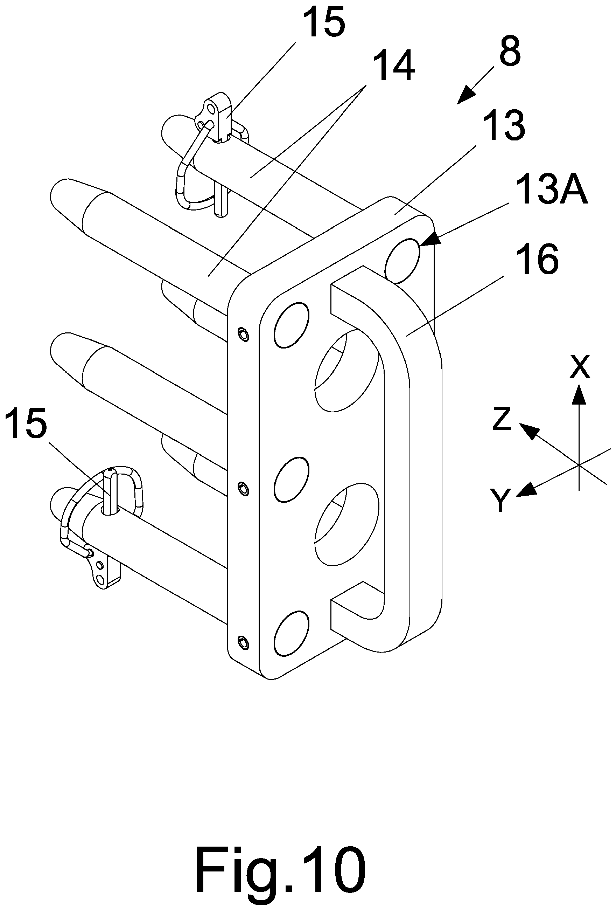

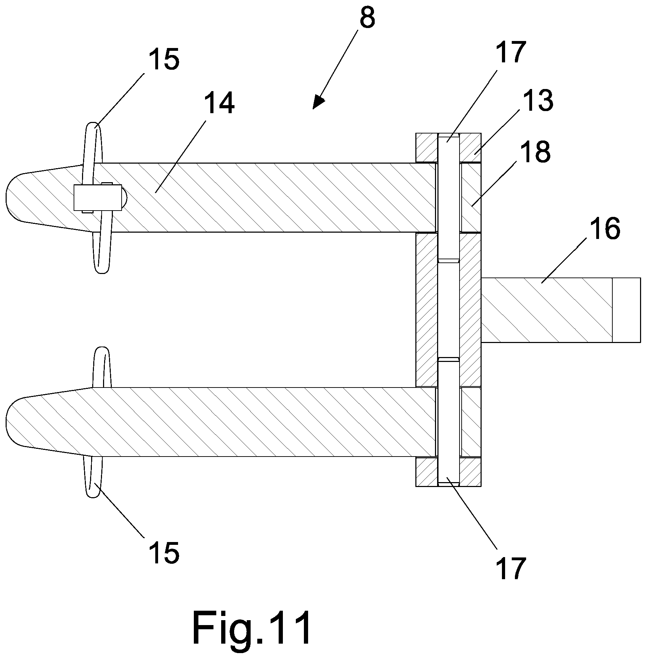

Wie aus Fig. 10 und Fig. 11 im Detail ersichtlich, weist der Bolzenverbinder 8 eine Grundplatte 13 mit Öffnungen 13A auf, in denen die ersten Enden mehrerer Bolzen 14 montiert sind. Die Bolzen 14 stehen vorzugsweise im Wesentlichen senkrecht von der Grundplatte 13 ab. In der gezeigten Ausführung weist der Bolzenverbinder 8 übereinander drei Reihen zu je zwei Bolzen 14 auf, so dass insgesamt sechs Bolzen 14 am Bolzenverbinder 8 vorgesehen sind. An zumindest einem der Bolzen 14, hier an zwei der sechs Bolzen 14, kann ein Sicherungssplint 15 lösbar angeordnet werden, um ein ungewolltes Herausziehen des Bolzenverbinders 8 im verbundenen Zustand zu verhindern. An der Rückseite der Grundplatte 13 kann ein nach hinten abstehender Haltebügel 16 vorgesehen, welcher die Handhabung des Bolzenverbinders 8 beim Aufbau des Traggerüsts 1 erleichtert.

Die ersten Enden der Bolzen 14 sind mit Hilfe von Haltestiften 17 an der Grundplatte 13 montiert. Zu diesem Zweck weisen die Bolzen 14 an den ersten Enden Querbohrungen 18 auf, durch welche die Haltestifte 17 gesteckt sind. Die Haltestifte 17 sind im Wesentlichen ohne Spiel an der Grundplatte 13 befestigt. Demgegenüber sind die Querbohrungen 18 der Bolzen 14 etwas breiter als der Durchmesser der Haltestifte 17. Außerdem sind die Öffnungen 13A in der Grundplatte 13 etwas breiter als der Durchmesser der Bolzen 14. Dadurch sind die Bolzen 14 in eine erste Richtung X der Grundplatte mit einem ersten Spiel und in eine zweite Richtung Y der Grundplatte mit einem zweiten Spiel an der Grundplatte 13 verstellbar gelagert. In der gezeigten Ausführung sind die Bolzen 14 zudem in eine dritte Richtung Z mit einem dritten Spiel an der Grundplatte 13 angebracht. In der gezeigten Ausführung erstreckt sich die erste Richtung X in Längsrichtung der rechteckigen Grundplatte 13, die zweite Richtung Y in Querrichtung der rechteckigen Grundplatte 13 und die dritte Richtung Z senkrecht zur Grundplatte 13.

Diese Bolzenverbinder 8 können zum einen als Vertikalanschlüsse an den unteren Verbindungsteilen 3A oder an den oberen Verbindungsteilen 3C verwendet werden. Darüber hinaus kann dieselbe Ausführung des Bolzenverbinders 8 beim mittleren Verbindungsteil 3B eingesetzt werden, welches als Längsverbinder mit zwei in entgegengesetzten Richtungen erstreckten Verbindungsbereichen 10 ausgebildet ist, um zwei übereinander folgende Riegel 2 miteinander zu verbinden.

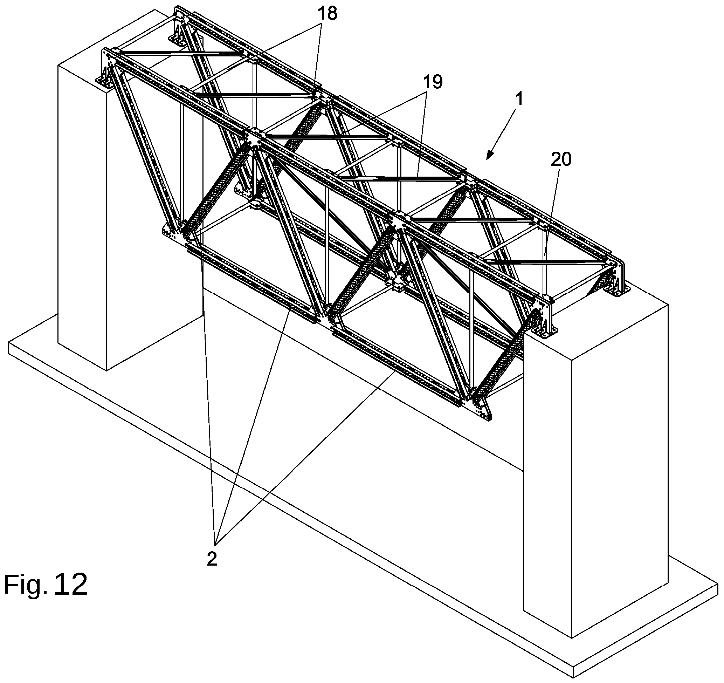

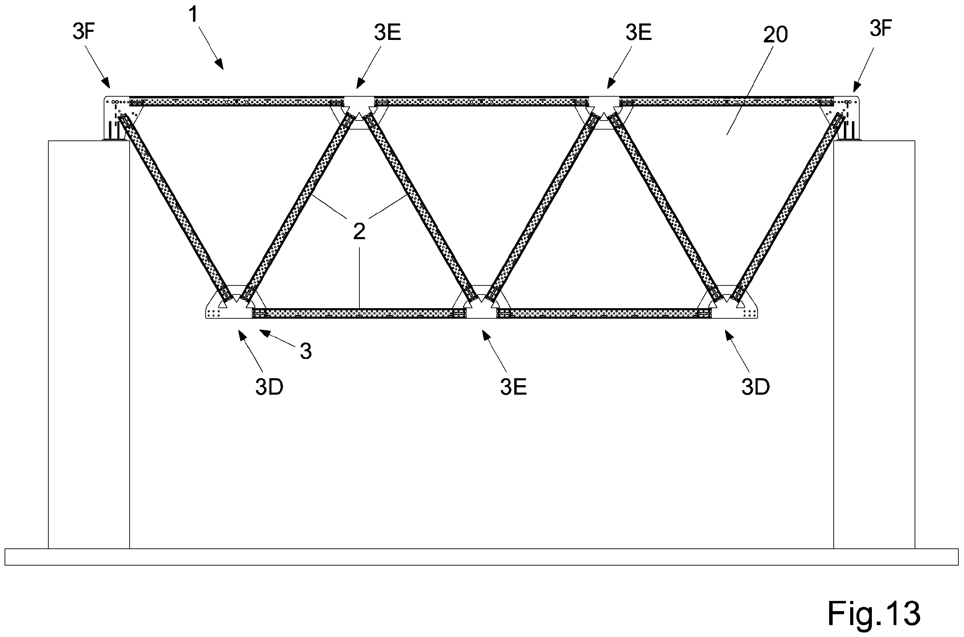

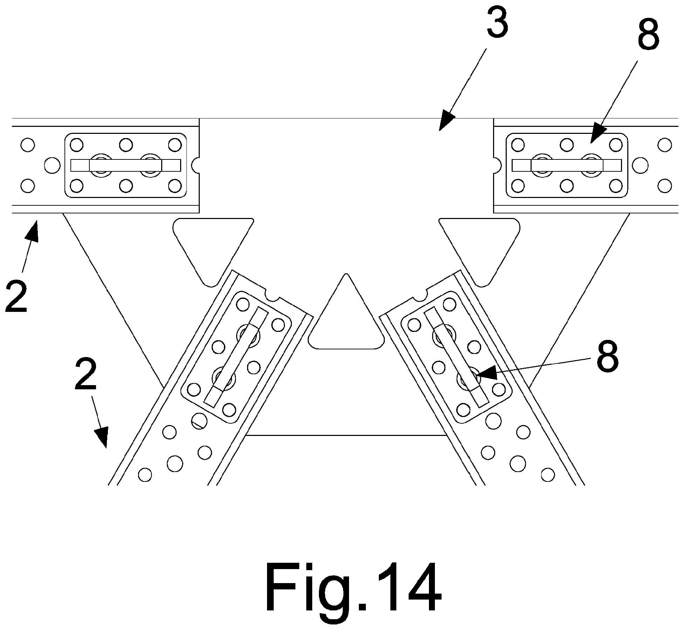

In den Fig. 12 bis 14 ist eine alternative Ausführung des Traggerüsts 1 als Rüstbinder, d.h. als überbrückendes Fachwerk, gezeigt, welcher in horizontaler Richtung langerstreckt ist. Bei dieser Ausführung sind die Verbindungsteile 3 als Fachwerkverbinder mit mehreren spitzwinkelig angeordneten Verbindungsbereichen 10 für die Riegel 2 ausgeführt. In der gezeigten Ausführung sind äußere Verbindungsteile 3D mit genau drei Verbindungsbereichen 10 vorgesehen, an denen genau drei Riegel 2, jeweils mit Hilfe eines Bolzenverbinders 8, montiert sind. Weiters sind mittlere Verbindungsteile 3E mit genau vier Verbindungsbereichen 10 vorgesehen, an denen genau vier Riegel 2, jeweils mit Hilfe eines Bolzenverbinders 8, montiert sind. Weiters sind Verbindungsteile 3 als seitliche Auflager 3F ausgebildet, an denen genau zwei Riegel 2 montiert sind. Die Riegel 2 bilden zwei Fachwerke, welche seitlich durch horizontale Streben 18 im rechten Winkel auf die Fachwerke und diagonale Streben 19 winkelig zu den Fachwerken verbunden sind. Weiters können zusätzliche vertikale Streben 20 vorgesehen sein.

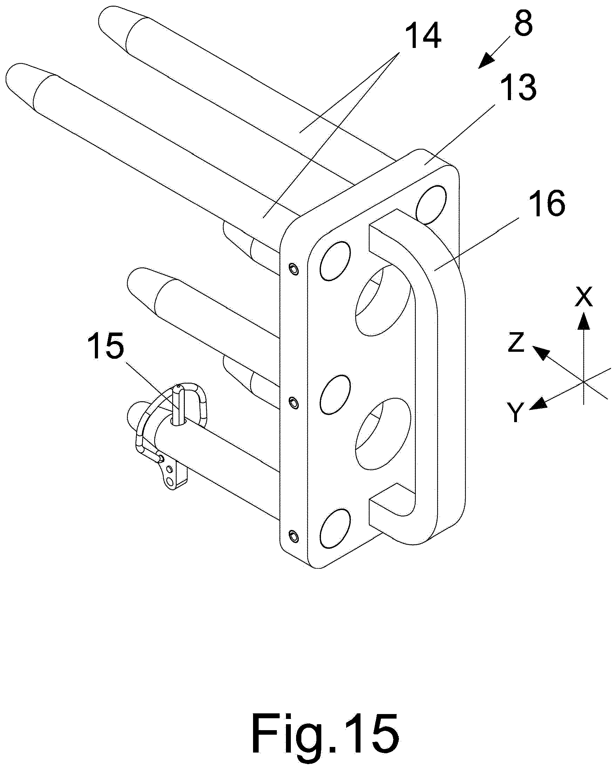

Fig. 15 zeigt eine alternative Ausführung eines Bolzenverbinders 8, wobei die Bolzen 14 unterschiedliche Längen aufweisen können, hier sind die beiden oberen Bolzen 14 länger ausgeführt. Weiters sind die Bolzen 14 beweglich an der Grundplatte 13 angebracht. An zumindest einem der Bolzen 14 kann ein Sicherungssplint 15 lösbar angeordnet werden, um ein ungewolltes Herausziehen des Bolzenverbinders 8 im verbundenen Zustand zu verhindern. Zur einfacheren Handhabung ist an der Rückseite der Grundplatte 13 ein Haltegriff, hier in Form des Haltebügels 16, vorgesehen.

## Patentansprüche

1. Baustruktur, insbesondere Trag- oder Stützgerüst (1), aufweisend:
zumindest ein Verbindungsteil (3),
zumindest einen Riegel (2),
wobei der Riegel (2) zwei Profile (9), insbesondere U-Profile, aufweist,
wobei ein Verbindungsbereich (10) des Verbindungsteils (3) zwischen den zwei Profilen (9) des Riegels (2) angeordnet ist,
wobei der Riegel (2) über einen Bolzenverbinder (8) mit dem Verbindungsteil (3) verbunden ist,
**dadurch gekennzeichnet, dass**
der Bolzenverbinder (8) eine Grundplatte (13) und mehrere Bolzen (14), die an der Grundplatte (13) angebracht sind, aufweist, wobei der Bolzenverbinder (8) die zwei Profile (9) des Riegels (2) mit dem Verbindungsbereich (10) des Verbindungsteils (3) verbindet.

2. Baustruktur nach Anspruch 1, **dadurch gekennzeichnet, dass** die Bolzen (14) beweglich an der Grundplatte (13) angebracht sind.

3. Baustruktur nach Anspruch 2, **dadurch gekennzeichnet, dass** die Bolzen (14) in eine erste Richtung (X) der Grundplatte (13) mit einem ersten Spiel und in eine zweite Richtung (Y) der Grundplatte (13) mit einem zweiten Spiel beweglich an der Grundplatte (13) angebracht sind.

4. Baustruktur nach einem der Ansprüche 1 bis 3, **dadurch gekennzeichnet, dass** erste Enden der Bolzen (14) über Haltestifte (17) an der Grundplatte (13) gelagert sind, wobei bevorzugt die Bolzen (14) an den ersten Enden Querbohrungen (18) aufweisen, durch welche die Haltestifte (17) gesteckt sind.

5. Baustruktur nach einem der Ansprüche 1 bis 4, **dadurch gekennzeichnet, dass** zumindest ein Sicherungselement, insbesondere ein Sicherungssplint (15), lösbar mit einem zweiten Ende eines der Bolzen (14) verbunden ist.

6. Baustruktur nach einem der Ansprüche 1 bis 5, **dadurch gekennzeichnet, dass** ein Haltebügel (16) zum Hantieren des Bolzenverbinders (8), insbesondere an der Rückseite der Grundplatte (13), vorgesehen ist.

7. Baustruktur nach einem der Ansprüche 1 bis 6, **dadurch gekennzeichnet, dass** zumindest zwei Reihen, vorzugsweise drei Reihen, mit jeweils zumindest zwei Bolzen (14) an der Grundplatte (13) angebracht sind.

8. Baustruktur (1) nach einem der Ansprüche 1 bis 7, **dadurch gekennzeichnet, dass** das Verbindungsteil (3) als Längsverbinder mit zwei in entgegengesetzten Richtungen erstreckten Verbindungsbereichen (10) ausgebildet ist, wobei zwei Riegel (2) über zwei Bolzenverbinder (8) mit den zwei in entgegengesetzten Richtungen erstreckten Verbindungsbereichen (10) des Verbindungsteils (3) verbunden sind.

9. Baustruktur (1) nach Anspruch 7, **dadurch gekennzeichnet, dass** das Verbindungsteil (3) als Fachwerkverbinder mit mehreren winkelig zueinander angeordneten Verbindungsbereichen (10) ausgebildet ist, wobei bevorzugt zwei, drei oder vier Riegel (2) in spitzen Winkeln zueinander über eine entsprechende Anzahl von Bolzenverbindern (8) mit einer entsprechenden Anzahl von Verbindungsbereichen (10) des Verbindungsteils (3) verbunden sind.

10. Baustruktur (1) nach einem der Ansprüche 1 bis 9, **dadurch gekennzeichnet, dass** die Baustruktur einen Rüstbinder mit mehreren Riegeln (2), mehreren Verbindungsteilen (3) und mehreren Bolzenverbindern (8) aufweist.

11. Baustruktur (1) nach einem der Ansprüche 1 bis 10, **dadurch gekennzeichnet, dass** die Baustruktur einen in die Höhe ragenden Lastturm mit mehreren Riegeln (2), mehreren Verbindungsteilen (3) und mehreren Bolzenverbindern (8) aufweist, wobei die Bolzenverbinder (8) jeweils zumindest zwei Riegel (2) mit einem der Verbindungsteile (3) verbinden.

12. Schalungsvorrichtung, aufweisend:
eine Baustruktur, insbesondere ein Trag- oder Stützgerüst (1), nach einem der Ansprüche 1 bis 11,
eine Schalung, welche mit der Baustruktur verbunden ist.

13. Verfahren zum Zusammenbau einer Baustruktur, insbesondere eines Trag- oder Stützgerüsts (1), mit den Schritten:
Vorsehen zumindest eines Verbindungsteils (3),
Vorsehen zumindest eines Riegels (2), wobei der Riegel (2) zwei Profile (9), insbesondere U-Profile, aufweist, wobei ein Verbindungsbereich (10) des Verbindungsteils (3) zwischen den zwei Profilen (9) des Riegels (2) angeordnet ist,
Verbinden des Riegels (2) mit dem Verbindungsteil (3) mittels eines Bolzenverbinders (2), wobei der Bolzenverbinder (8) eine Grundplatte (13) und mehrere Bolzen (14), die an der Grundplatte (13) angebracht sind, aufweist, wobei der Bolzenverbinder (8) die zwei Profile (9) des Riegels (2) mit dem Verbindungsbereich (10) des Verbindungsteils (3) verbindet.

## Claims

1. Building structure, in particular load-bearing or supporting framework (1), comprising:
at least one connecting part (3),
at least one bar (2),
the bar (2) having two profiles (9), in particular U-profiles,
a connecting region (10) of the connecting part (3) being arranged between the two profiles (9) of the bar (2),
the bar (2) being connected to the connecting part (3) by means of a bolt connector (8),
**characterised in that**
the bolt connector (8) comprises a base plate (13) and a plurality of bolts (14) which are attached to the base plate (13), the bolt connector (8) connecting the two profiles (9) of the bar (2) to the connecting region (10) of the connecting part (3).

2. Building structure according to claim 1, **characterised in that** the bolts (14) are movably attached to the base plate (13).

3. Building structure according to claim 2, **characterised in that** the bolts (14) are attached to the base plate (13) so as to be movable in a first direction (X) of the base plate (13) with a first clearance and in a second direction (Y) of the base plate (13) with a second clearance.

4. Building structure according to any of claims 1 to 3, **characterised in that** first ends of the bolts (14) are mounted on the base plate (13) via retaining pins (17), the bolts (14) preferably having transverse bores (18) at the first ends, through which bores the retaining pins (17) are inserted.

5. Building structure according to any of claims 1 to 4, **characterised in that** at least one securing element, in particular a securing split pin (15), is releasably connected to a second end of one of the bolts (14).

6. Building structure according to any of claims 1 to 5, **characterised in that** a retaining bracket (16) is provided, in particular on the rear side of the base plate (13), for handling the bolt connector (8).

7. Building structure according to any of claims 1 to 6, **characterised in that** at least two rows, preferably three rows, each having at least two bolts (14) are attached to the base plate (13).

8. Building structure (1) according to any of claims 1 to 7, **characterised in that** the connecting part (3) is designed as a longitudinal connector having two connecting regions (10) extending in opposite directions, two bars (2) being connected via two bolt connectors (8) to the two connecting regions (10) of the connecting part (3) extending in opposite directions.

9. Building structure (1) according to claim 7, **characterised in that** the connecting part (3) is designed as a truss connector having a plurality of connecting regions (10) arranged at an angle to one another, preferably two, three or four bars (2) being connected, at acute angles to one another, via a corresponding number of bolt connectors (8) to a corresponding number of connecting regions (10) of the connecting part (3).

10. Building structure (1) according to any of claims 1 to 9, **characterised in that** the building structure comprises a scaffold truss having a plurality of bars (2), a plurality of connecting parts (3) and a plurality of bolt connectors (8).

11. Building structure (1) according to any of claims 1 to 10,
**characterised in that** the building structure comprises an upwardly projecting load tower having a plurality of bars (2), a plurality of connecting parts (3) and a plurality of bolt connectors (8), the bolt connectors (8) each connecting at least two bars (2) to one of the connecting parts (3).

12. Formwork device, comprising:
a building structure, in particular a load-bearing or supporting framework (1), according to any of claims 1 to 11,
a formwork, which is connected to the building structure.

13. Method for assembling a building structure, in particular a load-bearing or supporting framework (1), comprising the steps of:
providing at least one connecting part (3),
providing at least one bar (2), the bar (2) comprising two profiles (9), in particular U-profiles, a connecting region (10) of the connecting part (3) being arranged between the two profiles (9) of the bar (2),
connecting the bar (2) to the connecting part (3) by means of a bolt connector (2), the bolt connector (8) comprising a base plate (13) and a plurality of bolts (14) which are attached to the base plate (13), the bolt connector (8) connecting the two profiles (9) of the bar (2) to the connecting region (10) of the connecting part (3).

## Revendications

1. Structure de construction, en particulier échafaudage de support ou d'appui (1), présentant :
au moins une pièce de liaison (3),
au moins une traverse (2),
dans laquelle la traverse (2) présente deux profilés (9), en particulier des profilés en U,
dans laquelle une zone de liaison (10) de la pièce de liaison (3) est agencée entre les deux profilés (9) de la traverse (2),
dans laquelle la traverse (2) est reliée avec la pièce de liaison (3) via un connecteur de boulons (8),
**caractérisée en ce que**
le connecteur de boulons (8) présente une plaque de base (13) et plusieurs boulons (14) qui sont montés contre la plaque de base (13), dans laquelle le connecteur de boulons (8) relie les deux profilés (9) de la traverse (2) avec la zone de liaison (10) de la pièce de liaison (3).

2. Structure de construction selon la revendication 1, **caractérisée en ce que** les boulons (14) sont montés de façon mobile contre la plaque de base (13).

3. Structure de construction selon la revendication 2, **caractérisée en ce que** les boulons (14) sont montés de façon mobile contre la plaque de base (13) dans une première direction (X) de la plaque de base (13) avec un premier jeu et dans une deuxième direction (Y) de la plaque de base (13) avec un deuxième jeu.

4. Structure de construction selon l'une des revendications 1 à 3, **caractérisée en ce que** des premières extrémités des boulons (14) sont placées contre la plaque de base (13) via des tiges de retenue (17), dans laquelle les boulons (14) présentent de préférence des alésages transversaux (18) au niveau des premières extrémités, par lesquels les tiges de retenue (17) sont enfichées.

5. Structure de construction selon l'une des revendications 1 à 4, **caractérisée en ce qu'**au moins un élément de sécurisation, en particulier une goupille de sécurisation (15), est relié de façon amovible avec une deuxième extrémité de l'un des boulons (14).

6. Structure de construction selon l'une des revendications 1 à 5, **caractérisée en ce qu'**un étrier de retenue (16) est prévu pour la manipulation du connecteur de boulons (8), en particulier contre le côté arrière de la plaque de base (13).

7. Structure de construction selon l'une des revendications 1 à 6, **caractérisée en ce qu'**au moins deux rangées, de préférence trois rangées, sont montées contre la plaque de base (13) avec respectivement au moins deux boulons (14).

8. Structure de construction (1) selon l'une des revendications 1 à 7, **caractérisée en ce que** la pièce de liaison (3) est conçue en tant que connecteur longitudinal avec deux zones de liaison (10) étendues dans des directions opposées, dans laquelle deux traverses (2) sont reliées avec les deux zones de liaison (10) étendues dans des directions opposées de la pièce de liaison (3) via deux connecteurs de boulons (8).

9. Structure de construction (1) selon la revendication 7, **caractérisée en ce que** la pièce de liaison (3) est conçue en tant que connecteur de treillis avec plusieurs zones de liaison (10) agencées en angle les unes par rapport aux autres, dans laquelle de préférence deux, trois ou quatre traverses (2) à angle aigu les unes par rapport aux autres sont reliées avec un nombre correspondant de zones de liaison (10) de la pièce de liaison (3) via un nombre correspondant de connecteurs de boulons (8).

10. Structure de construction (1) selon l'une des revendications 1 à 9, **caractérisée en ce que** la structure de construction présente une armature liante avec plusieurs traverses (2), plusieurs pièces de liaison (3) et plusieurs connecteurs de boulons (8).

11. Structure de construction (1) selon l'une des revendications 1 à 10, **caractérisée en ce que** la structure de construction présente une tour de soutènement s'élevant en hauteur avec plusieurs traverses (2), plusieurs pièces de liaison (3) et plusieurs connecteurs de boulons (8), dans laquelle les connecteurs de boulons (8) relient respectivement au moins deux traverses (2) avec l'une des pièces de liaison (3).

12. Dispositif de coffrage, présentant :
une structure de construction, en particulier un échafaudage de support ou d'appui (1), selon l'une des revendications 1 à 11,
un coffrage, lequel est relié avec la structure de construction.

13. Procédé d'assemblage d'une structure de construction, en particulier d'un échafaudage de support ou d'appui (1), avec les étapes de :
prévision d'au moins une pièce de liaison (3),
prévision d'au moins une traverse (2), dans lequel la traverse (2) présente deux profilés (9), en particulier des profilés en U, dans lequel une zone de liaison (10) de la pièce de liaison (3) est agencée entre les deux profilés (9) de la traverse (2),
liaison de la traverse (2) avec la pièce de liaison (3) au moyen d'un connecteur de boulons (2), dans lequel le connecteur de boulons (8) présente une plaque de base (13) et plusieurs boulons (14) qui sont montés contre la plaque de base (13), dans lequel le connecteur de boulons (8) relie les deux profilés (9) de la traverse (2) avec la zone de liaison (10) de la pièce de liaison (3).
